# EUROPEAN PATENT SPECIFICATION

(11) **EP 2 857 165 B1**
(45) Date of publication and mention of the grant of the patent: **13.03.2019**
(21) Application number: 13382385.6
(22) Date of filing: 01.10.2013
(51) Int. Cl.: B29B 9/06, B29B 9/12, B29B 9/16, B29B 11/06, B29B 11/12, B29L 31/00

(54) **Device and method for making masterbatch pellets for thermoplastic compositions**
Vorrichtung und Verfahren zum Herstellen von Masterbatch-Pellets für thermoplastische Zusammensetzungen
Dispositif et procédé de formation des pastilles de mélange-maître pour des compositions thermoplastiques

(43) Date of publication of application: 08.04.2015
(73) Proprietor: SABIC Global Technologies B.V., 4612 PX Bergen op Zoom (NL)
(72) Inventor: MATTHEIJ, Victor, 30390 Cartagena (ES); SOTO LÓPEZ, Pedro, 30390 Cartagena (ES)
(74) Representative: Stiebe, Lars Magnus

(56) References cited:
- WO-A1-2005/054344
- GB-A- 884 005
- GB-A- 2 280 187
- US-A- 3 045 280
- US-A- 4 817 517
- US-A1- 2009 130 443
- US-A1- 2010 183 759

## Description

### TECHNICAL FIELD

The present disclosure describes a process of making masterbatch pellets and a masterbatch facility for making masterbatch pellets.

### BACKGROUND

Additives packages (also referred to as a masterbatch) for thermoplastic compositions are important in industry as they allow for easy application of multiple additives to a thermoplastic composition as a single added component. Current methods of making a masterbatch can be time intensive and improved methods for making a masterbatch and new masterbatch compositions are desired.

WO 2005/054344 is directed towards a process for making a masterbatch for coloring thermoplastic polymers and is concerned with the use of waste toner powder in a masterbatch. The process comprises compacting a feedstock comprising waste toner powder into pellets.

### BRIEF DESCRIPTION

The invention relates to a masterbatch facility as defined in claim 1 and to a process as defined in claim 5. Further preferred embodiments are defined in the dependent claims.

### BRIEF DESCRIPTION OF THE DRAWINGS

Refer now to the figures, which are exemplary embodiments, and wherein the like elements are numbered alike.
FIG. 1 is an illustration of the present process of making a masterbatch; and
FIG. 2 is an illustration of a fill station.

### DETAILED DESCRIPTION

The Applicants developed a process for creating a masterbatch comprising and integrating a feed and blend system, a pellet mill, a product handling system, and a utilities system. The present process advantageously results in an improved homogeneity as compared to previous processes. The present process can produce greater than 450 tons of masterbatch per year, specifically, 500 tons of masterbatch per year. The present process can be entirely automated. The present process can reduce the preparation time, for example, by reducing a mixing time from greater than 15 minutes to less than 10 minutes, specifically, 30 seconds to 8 minutes, more specifically, 1 minute to 8 minutes, still more specifically, 3 minutes to 7 minutes. After mixing, the mixed composition processed through to screening, i.e. from the time the mixed composition exits the mixer to screening in less than or equal to 50 minutes, specifically, less than or equal to 40 minutes.

The feed and blend system comprises various component feeder(s) and/or component discharger(s) for feeding components into a mixer. The feed and blend system comprises at least one component feeder or at least one component discharger, where the component feeder can be used for feeding, for example, less than or equal to 100 kilograms (kg), e.g., less than or equal to 20 kg of a material to the mixer and where the component discharger can be a big bag unloading station, where the big bag can, for example, contain greater than or equal to 300 kg of pellets, for example, 400 kg of pellets. The feed and blend system comprises 1, specifically, 1 to 10, more specifically 3 to 6 component feeders. The component feeders can be, for example, a feeder as available from K-TRON. The feed and blend system comprises 1, specifically, 1 to 10, more specifically, 1 to 3 component dischargers. The feed and blend system also comprises a manual feed station for components that are present in small amounts, such as those that are present in an amount less than or equal to 15 weight percent (wt%), specifically, less than or equal to 11 wt% based on the total weight of the composition, for example 10 wt%.

At least one of the component feeders is an assisted component feeder that is designed to a handle difficult material, such as one that does not flow without assistance out of the feeder, where an amount of the component would remain in the feeder and/or along the sides of the feeder. The assisted component feeder can comprise a twin screw, an internal agitator, a vibrator, and a knocker system, or a combination comprising one or more of the foregoing, integrated to avoid material blocks. The vibrator can be a pneumatic vibrator that can impart a frequency a vibration on the feeder to avoid bridge generation of the material and to achieve flow of the material into the mixer. As used herein "bridge generation" refers to the formation of material bridges that span one side of the feeder to another such that the bridge material would otherwise remain in the feeder. The assisted component feeder can be, for example, a vibratory feeder as available from K-TRON.

The feed and blend system comprises at least 1 mixer. The mixer is a high speed, double shaft mixer, where the double shaft mixer rotates its shafts in opposite directions such as the PEGASUS mixer available from DINNISSEN BV. The use of a double shaft mixer can create a fluidized zone, which lies at the core of the mixing process. Such a mixer can allow for decreased mixing times of less than 5 minutes, specifically, 30 seconds to 4 minutes, more specifically, 30 seconds to 1 minute, while minimizing the amount of energy to be imparted on the composition. A maximum amount of energy that can be imparted on a specific masterbatch can be defined as the energy where at least one of the components, such as an antioxidant, melts. For example, when a component with a melting temperature of 60 degrees Celsius (°C), specifically, 50°C melts due to the shear imposed by the mixer.

The mixer can mix the components at a tip speed of 0.1 to 100 meters per second (m/s), specifically, 1 to 50 m/s, more specifically, 1 to 5 m/s. The mixer mixes the components to form a mixed composition.

After the mixed composition is prepared, the mixed composition is then fed to the pellet mill. The mixed composition can be fed to the pellet mill via an automated process. For example, the mixer can comprise a discharge gate, where during transfer the discharge gate can be opened to allow for material transfer out of the mixer. The mixer shafts, i.e. the mixer blades, can be rotating during transfer to facilitate transfer and ensure that a maximum amount of material is transferred.

The pellet mill comprises a buffer hopper, a mill feeder, a pellet compactor, and a screener. The buffer hopper is responsible for introducing the mixed composition to the mill feeder. The buffer hopper comprises a vibrator that can vibrate at a frequency of 2,000 to 100,000 vibrations per minute (vpm), specifically, 10,000 to 40,000 vpm, more specifically, 20,000 to 30,000 vpm, for example_25,000 vpm in order to facilitate flow of the mixed composition and to avoid bridge generation of the material and to achieve flow of the mixed composition into the mill feeder. The vibrator on the buffer hopper can be a pneumatic vibrator system.

The mill feeder is responsible for feeding the mixed composition from the buffer hopper to the pellet compactor. The mill feeder is a screw feeder (such as K2 MV-S60 available from K-TRON). The incorporation of a screw feeder here versus a typical configuration with a butterfly valve has the advantage of better control of the material flow through the feeder. The screw feeder has the advantage of flow control through the feeder as compared to a butterfly valve that has only two positions, open and closed. The mill feeder can operate at a rate of 45 to 4500 decimeters cubed per hour (dm³/h), specifically, 100 to 2000 dm³/h.

The pellet compactor comprises a die plate, a roll, and a cutter hub, where the roll functions to press the blended composition through die holes in the die plate, after which the cutter hub cuts the material as it is pressed through the holes to form the pellets. It is noted that different die plates can be used to produce pellets of varying size and shape. For example, the die holes can be circular to produce cylinders with a diameter of 0.5 to 5 millimeter (mm), specifically, 2.3 mm to 2.5 mm or can be rectangular with a length:width ratio of 1:10 to 10:1. The die plate can comprise die holes that are all the same size and shape or can comprise die holes with varying size and/or shape. It is further noted that the cutting rate of the cutter hub can be varied to result in pellets of differing height. For example, the resultant pellets can have a height of 1 to 30 mm. The pellet compactor can be one such those available from CPM EUROPE BV.

The pellets are then fed to a screener. The screener is used to separate the pellets into varying size grades and/or to remove one or both of fines (pellets smaller than a minimum desired pellet size, for example, pellets with a length of less than 3 mm) and oversize pellets (pellets larger than a maximum desired pellet size, for example, pellets with a length of greater than 15 mm).

The product handling system is responsible for packaging the produced pellets. The product handling system comprises a product hopper, a fill station, a conveyer, a pallet loading station, a stretch wrapper, a labeler, or a combination thereof. The product hopper comprises a product hopper vibrator system that is used to avoid caverns and bridging generations and ultimately results in an increase in processing rates through the present process. The product hopper vibrator system can be, for example, an external pneumatic vibrator.

The pellets are fed to the product handling system via a pellet feeder or can be fed via gravity. The pellets are then fed to a fill station that fills the pellets into product bags. The fill station can be one such as that provided by PAYPER BAGGING TECHNOLOGIES. The fill station can comprise a scale such that when a specified weight of pellets have been introduced to a product bag, then the filling can be paused and a new product bag can be introduced. Likewise, the filling can be monitored by using a specified fill rate and time. The fill station can comprise a vibrating table located under the product bag that is being filled. The vibrating table facilitates the complete filling of the product bags and can be especially useful in promoting settling of the pellets and can be especially useful in filling bags with angles.

The filled bags can then be moved, for example, via a conveyer such as a conveyer belt or a roller conveyer, to a pallet loader that functions to move the filled bags onto a pallet. Once a full pallet is achieved, the full pallet can be moved to a stretch wrapper to wrap the pallet and to a labeler to label the wrapped pallet. The pallet can then be moved to a storage area.

The utilities system comprises a ventilation system for removing particles from the air and/or that accumulate on surfaces. The ventilation system can be running throughout the operation, during product change over, and/or as needed. For example, the room housing the present process can comprise an air ventilation system comprising a rotary enthalpy recovery system and blowers (such as a fresh air inlet blower and an exhaust air inlet blower). Likewise, vacuum hoods are located throughout the room housing the present process and/or in areas of high particle generation (such as near one or more of a component feeder, a component discharger, a mixer, a pellet compactor, a screener, and a fill station) to pull air that comprises airborne particles into the ventilation system to, for example, an air filter. The rated ventilation for the room housing the present process can be 5 to 20, specifically, 8 to 12 air changes per hour. Furthermore, vacuum stations (such as a central vacuum station that can feed the vacuumed particles to a filter) are provided for users to vacuum particles that have accumulated on surfaces. There is at least 1, specifically, 1 to 10 vacuum stations.

The utilities system can regulate the temperature and/or the humidity. The temperature can be controlled such that temperature is 17 to 26°C. The temperature can be controlled such that the temperature is +/- 1°C of a set temperature, for example, 25°C +/-1°C or 18°C +/- 1°C. The humidity can be controlled such that the humidity is 40 to 64%.

The room that houses the present process can comprise an electrical room that houses the electrical and control equipment that monitors the present process. The electrical room can be maintained such that the temperature is less than or equal to 28°C. The humidity of the electrical room can be controlled such that the humidity is 40 to 64%.

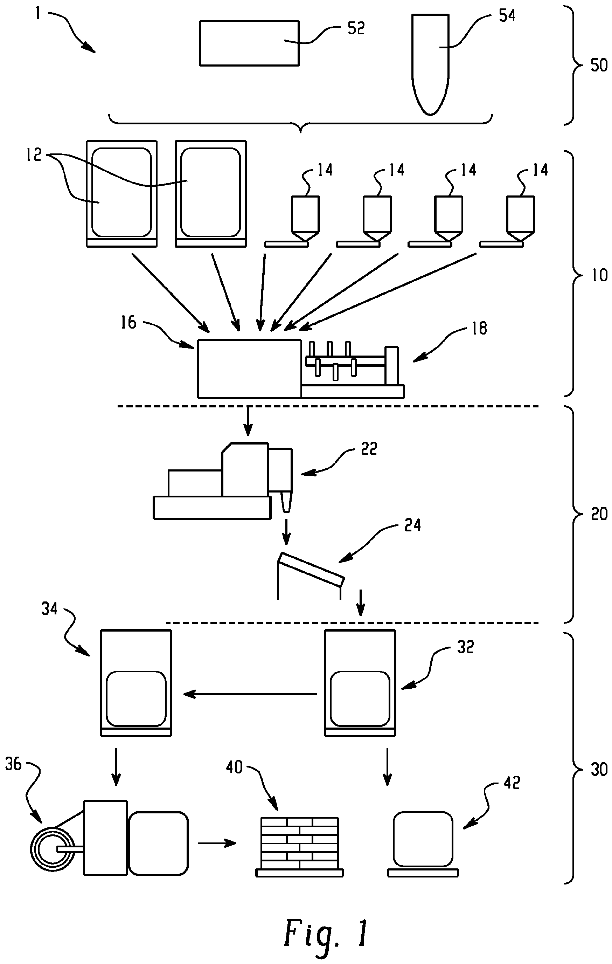

FIG. 1 illustrates a process of making a masterbatch 1. The process comprises a feed and blend system 10, a pellet mill 20, a product handling system 30, and a utilities system 50. FIG. 1 illustrates that components enter the feed and blend system 10 through one or more of component discharger 12, component feeder 14, or can be manually added through manual feeder 16. The components are fed from the component feeder(s) and/or component discharger(s) to mixer 18 that mixes the components to form a mixed composition. The mixed composition then enters the pellet mill 20, where FIG. 1 illustrates the mixed composition entering pellet compactor 22 that forms the mixed composition into pellets. The pellets then enter the screener 24 to screen the pellets based on a specified size range to form a screened composition.

The screened composition then enters the product handling system 30, where FIG. 1 illustrates the screened composition entering filling station 32. Filling station 32 can directly fill bags produce big bag product bag 42. Likewise, filling station 32 can be a mobile filling station that can be moved to hopper bagger station 34. Hopper bagger station 34 can fill bags at bagger station 36 that can fill bags, place them onto a pallet, wrap, and label said pallet to form small bag product pallet 40.

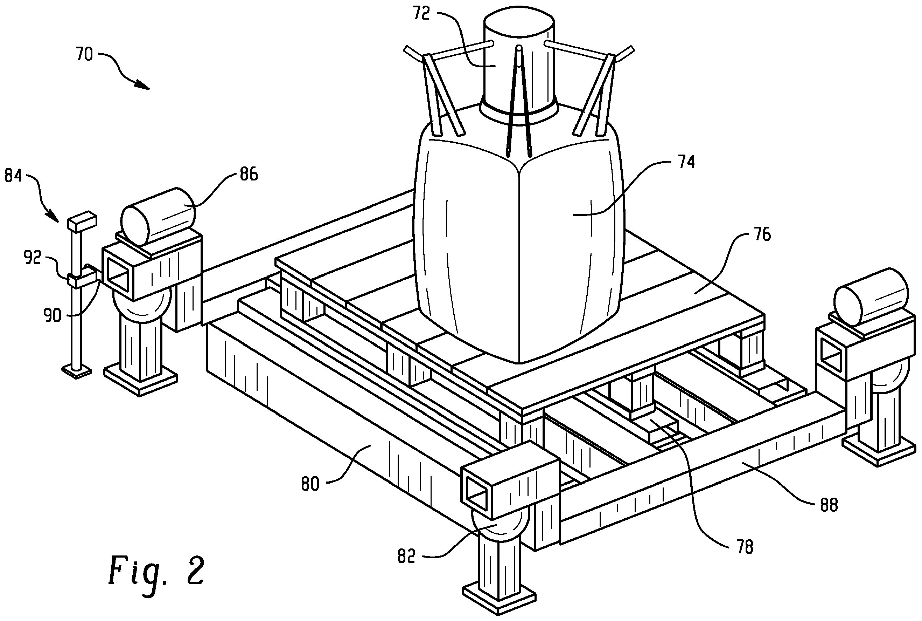

FIG. 2 illustrates a bagging station 70. Specifically, the pellets are filled into product bag 74, that can be a big bag, such as on that can hold 400 kg of pellets, via pellet filling pipe 72. Product bag 74 can be located on a pallet 76 that can be a pallet. The filling platform can be located on support(s) 78 that can be steel supports. The filling of the product bag 74 can be controlled via limit switch 84 or weighing steel structure 80. When the filling is controlled by a limit switch 84, then the support(s) 78 is supported by floating support 88. Floating support 88 floats via lifting air pad(s) 82. Limit switch 84 is located near pin 90 that is located on floating support 88. As the weight of the bag increases the floating support 88 lowers and the pin 90 lowers. When the pin 90 reached a minimum point 92, filling of the product bag 74 is ceased and the product bag is replaced. When the filling is controlled via weighing steel structure 80, then support(s) 78 are located on weighing steel structure 80 that may or may not be located on floating support 88. When a predetermined weight is obtained then filling is stopped and the bag is replaced. FIG. 2 further illustrates that vibrator 86 can be located on floating support 88 to improve the product filling.

Referring back to FIG. 1, the process further comprises a utilities system 50, including HVAC unit 52 and central vacuum 54.

The masterbatch pellets are prepared by feeding various components to the mixer. The components can include a thermoplastic polymer, a masterbatch quencher, a release agent, an antioxidant, an ultraviolet light (UV) stabilizing agent, a flame retardant, an anti drip agent, an antistatic agent, a colorant, or a combination comprising two or more of the foregoing. The thermoplastic polymer can comprise a polycarbonate, such as a melt or an interfacial polycarbonate.

"Polycarbonate" as used herein means a polymer or copolymer having repeating structural carbonate units of formula (1) 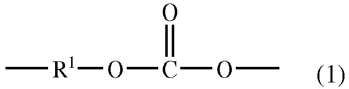 wherein at least 60 percent of the total number of R¹ groups are aromatic, or each R¹ contains at least one C₆₋₃₀ aromatic group. Specifically, each R¹ can be derived from a dihydroxy compound such as an aromatic dihydroxy compound of formula (2) or a bisphenol of formula (3). 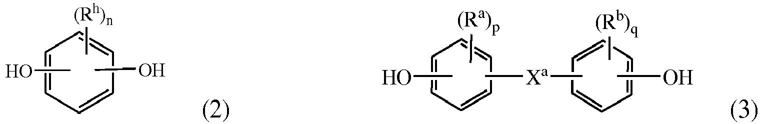 In formula (2), each R^{h} is independently a halogen atom, for example bromine, a C₁₋₁₀ hydrocarbyl group such as a C₁₋₁₀ alkyl, a halogen-substituted C₁₋₁₀ alkyl, a C₆₋₁₀ aryl, or a halogen-substituted C₆₋₁₀ aryl, and n is 0 to 4.

In formula (3), R^{a} and R^{b} are each independently a halogen, C₁₋₁₂ alkoxy, or C₁₋₁₂ alkyl; and p and q are each independently integers of 0 to 4, such that when p or q is less than 4, the valence of each carbon of the ring is filled by hydrogen. Accordingly, p and q can each be 0, or p and q can each be 1, and R^{a} and R^{b} can each be a C₁₋₃ alkyl group, specifically methyl, disposed meta to the hydroxy group on each arylene group. X^{a} is a bridging group connecting the two hydroxy-substituted aromatic groups, where the bridging group and the hydroxy substituent of each C₆ arylene group are disposed ortho, meta, or para (specifically para) to each other on the C₆ arylene group, for example, a single bond, -O-, -S-, -S(O)-, - S(O)₂-, -C(O)-, or a C₁₋₁₈ organic group, which can be cyclic or acyclic, aromatic or non-aromatic, and can further comprise heteroatoms such as halogens, oxygen, nitrogen, sulfur, silicon, or phosphorous. For example, X^{a} can be a substituted or unsubstituted C₃₋₁₈ cycloalkylidene; a C₁₋₂₅ alkylidene of the formula -C(R^{c})(R^{d}) - wherein R^{c} and R^{d} are each independently hydrogen, C₁₋₁₂ alkyl, C₁₋₁₂ cycloalkyl, C₇₋₁₂ arylalkyl, C₁₋₁₂ heteroalkyl, or cyclic C₇₋₁₂ heteroarylalkyl; or a group of the formula -C(=R^{e})- wherein R^{e} is a divalent C₁₋₁₂ hydrocarbon group.

Some illustrative examples of specific dihydroxy compounds include the following: bisphenol compounds such as 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha,alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl) sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole; resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like.

Specific dihydroxy compounds include resorcinol, 2,2-bis(4-hydroxyphenyl) propane ("bisphenol A" or "BPA", in which in which each of A¹ and A² is p-phenylene and Y¹ is isopropylidene in formula (3)), 3,3-bis(4-hydroxyphenyl) phthalimidine, 2-phenyl-3,3'-bis(4-hydroxyphenyl) phthalimidine (also known as N-phenyl phenolphthalein bisphenol, "PPPBP", or 3,3-bis(4-hydroxyphenyl)-2-phenylisoindolin-1-one), 1,1-bis(4-hydroxy-3-methylphenyl)cyclohexane (DMBPC), and from bisphenol A and 1,1-bis(4-hydroxy-3-methylphenyl)-3,3,5-trimethylcyclohexane (isophorone bisphenol).

The polycarbonate can be a linear homopolymer containing bisphenol A carbonate units (BPA-PC); or a branched, cyanophenyl end-capped BPA-PC

The polycarbonate can be a copolycarbonate. Specific copolycarbonates include those derived from bisphenol A and bulky bisphenol carbonate units, i.e., derived from bisphenols containing at least 12 carbon atoms, for example 12 to 60 carbon atoms, specifically, 20 to 40 carbon atoms. Examples of such copolycarbonates include copolycarbonates comprising bisphenol A carbonate units and 2-phenyl-3,3'-bis(4-hydroxyphenyl) phthalimidine carbonate units (a BPA-PPPBP copolymer), a copolymer comprising bisphenol A carbonate units and 1,1-bis(4-hydroxy-3-methylphenyl)cyclohexane carbonate units (a BPA-DMBPC copolymer), and a copolymer comprising bisphenol A carbonate units and isophorone bisphenol carbonate units (available, for example, under the trade name APEC from Bayer).

Polycarbonates manufactured and purified as described herein are suitable for use in a wide variety of compositions and applications as is known in the art. Thus, an additive composition can be added, for example, in an extruder, to the purified polycarbonate form a polycarbonate composition. The additive composition can be one or more additives selected to achieve a desired property, with the proviso that the additive(s) are also selected so as to not significantly adversely affect a desired property of the thermoplastic composition. The additive composition or individual additives can be mixed at a suitable time during the mixing of the components for forming the composition. The additive can be soluble and/or non-soluble in polycarbonate.

The additive composition can include an impact modifier, flow modifier, filler (e.g., a particulate polytetrafluoroethylene (PTFE), glass, carbon, mineral, or metal), reinforcing agent (e.g., glass fibers), antioxidant, heat stabilizer, light stabilizer, ultraviolet (UV) light stabilizer, UV absorbing additive, plasticizer, lubricant, release agent (such as a mold release agent), antistatic agent, anti-fog agent, antimicrobial agent, colorant (e.g. , a dye or pigment), surface effect additive, radiation stabilizer, flame retardant, anti-drip agent (e.g., a PTFE-encapsulated styrene-acrylonitrile copolymer (TSAN)), or a combination comprising one or more of the foregoing. For example, a combination of a heat stabilizer, mold release agent, and ultraviolet light stabilizer can be used. In general, the additives are used in the amounts generally known to be effective. For example, the total amount of the additive composition (other than any impact modifier, filler, or reinforcing agent) can be 0.001 to 10.0 wt%, or 0.01 to 5 wt%, each based on the total weight of the polymer in the composition.

The polycarbonate can be prepared via an interfacial polymerization. Although the reaction conditions for interfacial polymerization can vary, an exemplary process generally involves dissolving or dispersing a dihydroxy compound in aqueous caustic NaOH or KOH, adding the resulting mixture to a water-immiscible solvent, and contacting the reactants with a carbonate precursor in the presence of a catalyst such as, for example, a tertiary amine or a phase transfer catalyst, under controlled pH conditions, e.g., 8 to 10. The water-immiscible solvent can be, for example, methylene chloride, 1,2-dichloroethane, chlorobenzene, toluene, and the like. Among tertiary amines that can be used as catalysts in interfacial polymerization are aliphatic tertiary amines such as triethylamine and tributylamine, cycloaliphatic tertiary amines such as N,N-diethyl-cyclohexylamine, and aromatic tertiary amines such as N,N-dimethylaniline. Among the phase transfer catalysts that can be used are catalysts of the formula (R³)₄Q⁺X, wherein each R³ is the same or different, and is a C₁₋₁₀ alkyl; Q is a nitrogen or phosphorus atom; and X is a halogen atom or a C₁₋₈ alkoxy or C₆₋₁₈ aryloxy. Exemplary phase transfer catalysts include (CH₃(CH₂)₃)₄NX, (CH₃(CH₂)₃)₄PX, (CH₃(CH₂)₅)₄NX, (CH₃(CH₂)₆)₄NX, (CH₃(CH₂)₄)₄NX, CH₃(CH₃(CH₂)₃)₃NX, and CH₃(CH₃(CH₂)₂)₃NX, wherein X is Cl⁻, Br⁻, a C₁₋₈ alkoxy or a C_{6- 18} aryloxy. An effective amount of a phase transfer catalyst can be 0.1 to 10 wt%, or 0.5 to 2 wt%, each based on the weight of dihydroxy compound in the phosgenation mixture.

The polycarbonate can be made by a melt polymerization process, by co-reacting, in a molten state, monomers such as a dihydroxy reactant and a carbonate compound, such as phosgene or diphenyl carbonate. The melt polymerization process can be a batch or a continuous melt process. In either case, the melt polymerization conditions used can comprise two or more distinct reaction stages, for example, a first reaction stage in which the starting aromatic dihydroxy compound and diaryl carbonate are converted into an oligomeric polycarbonate and a second reaction stage wherein the oligomeric polycarbonate formed in the first reaction stage is converted to high molecular weight polycarbonate. Such "staged" polymerization reaction conditions are especially suitable for use in continuous polymerization systems wherein the starting monomers are oligomerized in a first reaction vessel and the oligomeric polycarbonate formed therein is continuously transferred to one or more downstream reactors in which the oligomeric polycarbonate is converted to high molecular weight polycarbonate. Typically, in the oligomerization stage the oligomeric polycarbonate produced has a number average molecular weight (Mn) of 1,000 to 7,500 Daltons. In one or more subsequent polymerization stages, the number average molecular weight of the polycarbonate can be increased to, for example, 8,000 to 25,000 Daltons (using polycarbonate standard).

The term "melt polymerization conditions" is understood to mean those conditions necessary to affect reaction between a dihydroxy compound and a carbonate compound in the presence of a transesterification catalyst. Although, solvents are generally not used in the process, and the reactants aromatic dihydroxy compound and the carbonate compound are in a molten state, the dihydroxy compound and/or the carbonate compound can be added to the polymerization unit as a solvent mixture, such as a mixture with acetone. The reaction temperature can be 100 to 350°C, specifically, 180 to 310°C. The pressure can be at atmospheric pressure, supra-atmospheric pressure, or a range of pressures from atmospheric pressure to 15 torr in the initial stages of the reaction, and at a reduced pressure at later stages, for example, 0.2 to 15 torr. The reaction time is generally 0.1 hours to 10 hours.

A transesterification catalyst(s) can be employed in the polymerization. Such catalysts include phase transfer catalysts of formula (R³)₄Q⁺X, wherein each R³ is the same or different, and is a C₁₋₁₀ alkyl group; Q is a nitrogen or phosphorus atom; and X is a halogen atom or a C₁₋₈ alkoxy group or C₆₋₁₈ aryloxy group. Transesterification catalysts include tetrabutylammonium hydroxide, methyltributylammonium hydroxide, tetrabutylammonium acetate, tetrabutylphosphonium hydroxide, tetrabutylphosphonium acetate, tetrabutylphosphonium phenolate, or a combination comprising at least one of the foregoing. The catalyst can comprise a potassium sodium phosphate of the formula NaKHPO₄.

Catalysts used in the melt transesterification polymerization production of polycarbonates can include alpha and/or beta catalysts. Beta catalysts are typically volatile and degrade at elevated temperatures and can therefore be used at early low-temperature polymerization stages.

Possible beta catalyst(s) can comprise a quaternary ammonium compound, a quaternary phosphonium compound, or a combination comprising at least one of the foregoing. The quaternary ammonium compound can be a compound of the structure (R⁴)₄N⁺X⁻, wherein each R⁴ is the same or different, and is a C₁₋₂₀ alkyl, a C₄₋₂₀ cycloalkyl, or a C₄₋₂₀ aryl; and X⁻ is an organic or inorganic anion, for example a hydroxide, halide, acetate, phenoxide, carboxylate, sulfonate, sulfate, formate, carbonate, or bicarbonate. Examples of organic quaternary ammonium compounds include tetramethyl ammonium hydroxide, tetrabutyl ammonium hydroxide, tetramethyl ammonium acetate, tetramethyl ammonium formate, tetrabutyl ammonium acetate, and combinations comprising at least one of the foregoing. Tetramethyl ammonium hydroxide is often used.

The quaternary phosphonium compound can be a compound of the structure (R⁵)₄P⁺X⁻, wherein each R⁵ is the same or different, and is a C₁₋₂₀ alkyl, a C₄₋₂₀ cycloalkyl, or a C₄₋₂₀ aryl; and X⁻ is an organic or inorganic anion, for example a hydroxide, halide, carboxylate, sulfonate, sulfate, formate, carbonate, or bicarbonate. Where X⁻ is a polyvalent anion such as carbonate or sulfate it is understood that the positive and negative charges in the quaternary ammonium and phosphonium structures are properly balanced. For example, where R²⁰ to R²³ are each methyls and X⁻ is carbonate, it is understood that X⁻ represents 2 (CO₃⁻²). Examples of organic quaternary phosphonium compounds include tetramethyl phosphonium hydroxide, tetramethyl phosphonium acetate, tetramethyl phosphonium formate, tetrabutyl phosphonium hydroxide, tetrabutyl phosphonium acetate (TBPA), tetraphenyl phosphonium acetate, tetraphenyl phosphonium phenoxide, and combinations comprising at least one of the foregoing. TBPA is often used.

The amount of beta catalyst employed is typically based upon the total number of moles of dihydroxy compound employed in the polymerization reaction. When referring to the ratio of beta catalyst, for example, phosphonium salt, to all dihydroxy compounds employed in the polymerization reaction, it is convenient to refer to moles of phosphonium salt per mole of the dihydroxy compound(s), meaning the number of moles of phosphonium salt divided by the sum of the moles of each individual dihydroxy compound present in the reaction mixture. The amount of beta catalyst (e.g., organic ammonium or phosphonium salts) employed typically will be 1 x 10⁻² to 1 x 10⁻⁵, specifically, 1 x 10⁻³ to 1 x 10⁻⁴ moles per total mole of the dihydroxy compounds in the reaction mixture.

Alpha catalysts are typically more thermally stable and less volatile than beta catalysts. Nearly all of the alpha catalyst (e.g., greater than 80 wt%, specifically greater than 90%) survives the polymerization process. As such, this catalyst is available to catalyze additional (and generally unwanted) reactions downstream of the polymerization process, such as in the extruder.

The alpha catalyst can comprise a source of alkali or alkaline earth ions. The sources of these ions include alkaline earth hydroxides such as magnesium hydroxide and calcium hydroxide. Sources of alkali metal ions can include the alkali metal hydroxides such as illustrated by lithium hydroxide, sodium hydroxide, potassium hydroxide, and combinations comprising at least one of the foregoing. Examples of alkaline earth metal hydroxides are calcium hydroxide, magnesium hydroxide, and combinations comprising at least one of the foregoing. Of these, sodium hydroxide is particularly desirable. The alpha catalyst typically will be used in an amount sufficient to provide 1 x 10⁻² to 1 x 10⁻⁸ moles, specifically, 1 x 10⁻⁴ to 1 x 10⁻⁷ moles of metal hydroxide per mole of the dihydroxy compounds employed. Other possible sources of alkaline earth and alkali metal ions include salts of carboxylic acids (such as sodium acetate) and derivatives of ethylene diamine tetraacetic acid (EDTA) (such as EDTA tetrasodium salt, and EDTA magnesium disodium salt), as well as combinations comprising at least one of the foregoing. For example, the alpha catalyst can comprise alkali metal salt(s) of a carboxylic acid, alkaline earth metal salt(s) of a carboxylic acid, or a combination comprising at least one of the foregoing. In another example, the alpha catalyst comprises Na₂Mg EDTA or a salt thereof.

The alpha transesterification catalyst can also, or alternatively, comprise salt(s) of a non-volatile inorganic acid. For example, the alpha catalyst can comprise salt(s) of a non-volatile inorganic acid such as NaH₂PO₃, NaH₂PO₄, Na₂HPO₃, NaHCO₃, Na₂CO₃, KH₂PO₄, CsH₂PO₄, Cs₂HPO₄, Cs₂CO₃, and combinations comprising at least one of the foregoing. Alternatively, or in addition, the alpha transesterification catalyst can comprise mixed alkali metal salt(s) of phosphoric acid, such as NaKHPO₄, CsNaHPO₄, CsKHPO₄, and combinations comprising at least one of the foregoing.

A quencher can be added, for example to a finishing extruder to reduce the activity of the catalyst. Quenching agents include boric acid esters (e.g., B(OCH₃)₃, B(OCH₂CH₃)₃, and B(OC₆H₆)₃, zinc borate, boron phosphate, aluminum stearate, aluminum silicate, zirconium carbonate, zirconium C₁-C₁₂ alkoxides, zirconium hydroxycarboxylates, gallium phosphide, gallium antimonide, germanium oxide, C₁-C₃₂ organogermanium compounds, C₄-C₃₂ tetraorganotin tin compound, C₆-C₃₂ hexaorganotin compound (e.g., [(C₆H₆O)Sn(CH₂CH₂CH₂CH₃)₂]₂O), Sb₂O₃, antimony oxide, C₁-C₃₂ alkylantimony, bismuth oxide, C₁-C₁₂ alkylbismuth, zinc acetate, zinc stearate, C₁-C₃₂ alkoxytitanium, and titanium oxide, phosphoric acid, phosphorous acid, hypophosphorous acid, pyrophosphoric acid, polyphosphoric acid, boric acid, hydrochloric acid, hydrobromic acid, sulfuric acid, sulfurous acid, adipic acid, azelaic acid, dodecanoic acid, L-ascorbic acid, aspartic acid, benzoic acid, formic acid, acetic acid, citric acid, glutamic acid, salicylic acid, nicotinic acid, fumaric acid, maleic acid, oxalic acid, benzenesulfinic acid, C₁-C₁₂ dialkyl sulfates (e.g., dimethyl sulfate and dibutyl sulfate), alkyl sulfonic esters of the formula R₁SO₃R₂ wherein R₁ is hydrogen, C₁-C₁₂ alkyl, C₆-C₁₈ aryl, or C₇-C₁₉ alkylaryl, and R₂ is C₁-C₁₂ alkyl, C₆-C₁₈ aryl, or C₇-C₁₉ alkylaryl (e.g., benzenesulfonate, p-toluenesulfonate, methylbenzene sulfonate, ethylbenzene sulfonate, n-butyl benzenesulfonate, octyl benzenesulfonate and phenyl benzenesulfonate, methyl p-toluenesulfonate, ethyl p-toluenesulfonate, n-butyl p-toluene sulfonate, octyl p-toluenesulfonate and phenyl p- toluenesulfonate, in particular alkyl tosylates such as n-butyl tosylate), sulfonic acid phosphonium salts of the formula (R^{a}SO₃⁻)(PR^{b}₄)⁺ wherein R^{a} is hydrogen, C₁-C₁₂ alkyl, C₆-C₁₈ aryl, or C₇-C₁₉ alkylaryl, and each R^{b} is independently hydrogen, C₁-C₁₂ alkyl or C₆-C₁₈ aryl, sulfonic acid derivatives of the formula A¹-(Y¹-SO₃X¹)ₘ wherein A¹ is a C₁-C₄₀ hydrocarbon group having a valence of m, Y¹ is a single bond or an oxygen atom, X¹ is a secondary or tertiary alkyl group of the formula - CR¹⁵R¹⁶R¹⁷, a metal cation of one equivalent, an ammonium cation (e.g, NR^{b}₃⁺ wherein each R^{b} is independently hydrogen, C₁-C₁₂ alkyl or C₆-C₁₈ aryl), or a phosphonium (e.g, PR^{b}₄⁺ wherein each R^{b} is independently hydrogen, C₁-C₁₂ alkyl or C₆-C₁₈ aryl) wherein R¹⁵ is a hydrogen atom or an alkyl group having 1 to 5 carbon atoms, R¹⁶ is a hydrogen atom, a phenyl group or an alky group having 1 to 5 carbon atoms, and R¹⁷ is the same as or different from R¹³ and has the same definition as R¹⁵, provided that two of R¹⁵, R¹⁶, and R¹⁷ cannot be hydrogen atoms, and m is an integer of 1 to 4, provided that when Y¹ is a single bond, all of X¹ in an amount of m cannot be metal cations of one equivalent, a compound of the formula ⁺X²-A²-Y¹-SO₃⁻ wherein A² is a divalent hydrocarbon group, ⁺X² is a secondary, tertiary or quaternary ammonium cation or a secondary (e.g., , tertiary or quaternary phosphonium cation, and Y¹ is a single bond or an oxygen atom, a compound of the formula A³-(⁺X³)ₙ·(R-Y¹-SO₃⁻)ₙ wherein A³ is a C₁-C₄₀ hydrocarbon group having a valence of n, ⁺X³ is a secondary, tertiary or quaternary ammonium cation (e.g., NR^{b}₃⁺ wherein each R^{b} is independently hydrogen, C₁-C₁₂ alkyl or C₆-C₁₈ aryl), or a secondary, tertiary or quaternary phosphonium cation (e.g., PR^{b}₄⁺ wherein each R^{b} is independently hydrogen, C₁-C₁₂ alkyl or C₆-C₁₈ aryl), R is a monovalent C₁-C₄₀ hydrocarbon group, n is an integer of 2 to 4, and Y¹ is a single bond or an oxygen atom, a compound of the formula A⁵-Ad¹-A⁴-(Ad²-A⁵)_{ℓ} wherein A⁵ is a monovalent or divalent C₁-C₄₀ hydrocarbon group, A⁴ is a divalent C₁-C₄₀ hydrocarbon group, each of Ad¹ and Ad² is independently an acid anhydride group selected from -SO₂-O-SO₂-, -SO₂-O-CO- and -CO-O-SO₂-, and ℓ is 0 or 1, provided that when ℓ is O, -(Ad²-A⁵)_{ℓ}, is a hydrogen atom or a bond between A⁴ and A⁵, in which A⁵ is a divalent hydrocarbon group or a single bond, aminosulfonic esters having the formula RₐR_{b}N-A-SO₃R_{c}, wherein Rₐ and R_{b} are each independently hydrogen, C₁-C₁₂ alkyl, C₆-C₂₂ aryl, C₇-C₁₉ alkylaryl or Rₐ and R_{b}, either singly or in combination, form an aromatic or non-aromatic heterocyclic compound with N (e.g., pyrrolyl, pyridinyl, pyrimidyl, pyrazinyl, carbazolyl, quinolinyl, imidazoyl, piperazinyl, oxazolyl, thiazolyl, pyrazolyl, pyrrolinyl, indolyl, purinyl, pyrrolydinyl, or the like), R_{c} is hydrogen, and A is C₁-C₁₂ alkyl, C₆-C₁₈ aryl, or C₁₇-C₁₉ alkylaryl (e.g., compounds such as N-(2-hydroxyethyl) piperazine-N'-3-propanesulfonic acid, 1,4,-piperazinebis (ethanesulfonic acid), and 5-dimethylamino-1-napthalenesulfonic acid), ammonium sulfonic esters of the formula RₐR_{b}R_{c}N⁺-A-SO₃⁻, wherein Rₐ, R_{b}, are each independently hydrogen, C₁-C₁₂ alkyl, C₁-C₁₂ aryl, C₇-C₁₉ alkylaryl, or Rₐ and R_{b}, either singly or in combination, form an aromatic or non-aromatic heterocyclic compound with N (e.g., pyrrolyl, pyridinyl, pyrimidyl, pyrazinyl, carbazolyl, quinolinyl, imidazoyl, piperazinyl, oxazolyl, thiazolyl, pyrazolyl, pyrrolinyl, indolyl, purinyl, pyrrolydinyl, or the like), R_{c} is a hydrogen, and A is C₁-C₁₂ alkyl, C₆-C₁₈ aryl, or C₇-C₁₉ alkylaryl, sulfonated polystyrene, methyl acrylate-sulfonated styrene copolymer, and combinations comprising at least one of the foregoing. Quenching agents can include a combination of compounds, for example an alkyl tosylate such as n-butyl tosylate and phosphorus acid.

Branched polycarbonate can be prepared by adding a branching agent during polymerization. These branching agents include polyfunctional organic compounds containing at least three functional groups selected from hydroxyl, carboxyl, carboxylic anhydride, haloformyl, and mixtures of the foregoing functional groups. Specific examples include trimellitic acid, trimellitic anhydride, trimellitic trichloride, tris-p-hydroxy phenyl ethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents can be added at a level of 0.05 to 2.0 wt%. Mixtures comprising linear polycarbonates and branched polycarbonates can be used. The content of the following branching structures can be less than or equal to 2,000 ppm.

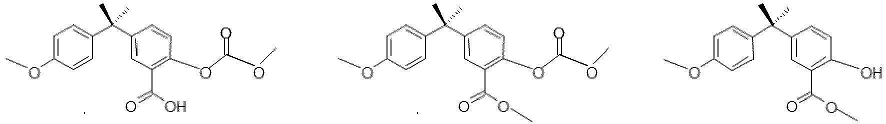

A branching agent can be employed in the polymerization and can result in an increase in polymer melt strength. The branching agent (1,1,1-tris-(hydroxyphenyl) ethane (THPE)) can be introduced to the polymerization unit, specifically, to a polymerization and/or an oligomerization vessel, as a solution of the branching agent dissolved in a branching solvent. The branching solvent selected for dissolving the branching agent can be any solvent capable of dissolving the branching agent at a level sufficient to deliver or introduce the desired amount of branching agent into the polymerization unit. The branching solvent can comprise lower alkanols, such as C₁₋₄ alkanols, including methanol, ethanol, propanol (such as n-propanol and isopropanol), n-butanol, or a combination comprising one or more of the foregoing.

The branching agent can be introduced in an amount such that it will result in a polycarbonate comprising up to 1.5 mole percent (mol%), specifically, up to 1.0 mol%, more specifically, up to 0.5 mol% branching agent in the final branched polycarbonate. The amount of dissolved branching agent present in the solution can be an amount of 0.5 to 50 weight percent (wt%), specifically, 5 to 40 wt%, more specifically, 15 to 35 wt% relative to the total weight of the branching agent and solvent solution. The polymerized polycarbonate can comprise a branching agent in the amount of 100 to 5,000 parts per million (ppm), specifically, 500 to 4,000 ppm, more specifically, 1,000 to 3,500 ppm based on the total amount of polycarbonate repeat units.

A chainstopper can be introduced to the polymerization unit. The chainstopper can be, for example, a monofunctional phenol.

The masterbatch quencher can be the same or different from a quencher used in the polymerization process of a melt polycarbonate that is present in the masterbatch. The masterbatch quencher can comprise boric acid esters (e.g., B(OCH₃)₃, B(OCH₂CH₃)₃, and B(OC₆H₆)₃, zinc borate, boron phosphate, aluminum stearate, aluminum silicate, zirconium carbonate, zirconium C₁-C₁₂ alkoxides, zirconium hydroxycarboxylates, gallium phosphide, gallium antimonide, germanium oxide, C₁-C₃₂ organogermanium compounds, C₄-C₃₂ tetraorganotin tin compound, C₆-C₃₂ hexaorganotin compound (e.g., [(C₆H₆O)Sn(CH₂CH₂CH₂CH₃)₂]₂O), Sb₂O₃, antimony oxide, C₁-C₃₂ alkylantimony, bismuth oxide, C₁-C₁₂ alkylbismuth, zinc acetate, zinc stearate, C₁-C₃₂ alkoxytitanium, and titanium oxide, phosphoric acid, phosphorous acid, hypophosphorous acid, pyrophosphoric acid, polyphosphoric acid, boric acid, hydrochloric acid, hydrobromic acid, sulfuric acid, sulfurous acid, adipic acid, azelaic acid, dodecanoic acid, L-ascorbic acid, aspartic acid, benzoic acid, formic acid, acetic acid, citric acid, glutamic acid, salicylic acid, nicotinic acid, fumaric acid, maleic acid, oxalic acid, benzenesulfinic acid, C₁-C₁₂ dialkyl sulfates (e.g., dimethyl sulfate and dibutyl sulfate), alkyl sulfonic esters of the formula R₁SO₃R₂ wherein R₁ is hydrogen, C₁-C₁₂ alkyl, C₆-C₁₈ aryl, or C₇-C₁₉ alkylaryl, and R₂ is C₁-C₁₂ alkyl, C₆-C₁₈ aryl, or C₇-C₁₉ alkylaryl (e.g., benzenesulfonate, p-toluenesulfonate, methylbenzene sulfonate, ethylbenzene sulfonate, n-butyl benzenesulfonate, octyl benzenesulfonate and phenyl benzenesulfonate, methyl p-toluenesulfonate, ethyl p-toluenesulfonate, n-butyl p-toluene sulfonate, octyl p-toluenesulfonate and phenyl p- toluenesulfonate, in particular alkyl tosylates such as n-butyl tosylate), sulfonic acid phosphonium salts of the formula (R^{a}SO₃⁻)(PR^{b}₄)⁺ wherein R^{a} is hydrogen, C₁-C₁₂ alkyl, C₆-C₁₈ aryl, or C₇-C₁₉ alkylaryl, and each R^{b} is independently hydrogen, C₁-C₁₂ alkyl or C₆-C₁₈ aryl, sulfonic acid derivatives of the formula A¹-(Y¹-SO₃X¹)ₘ wherein A¹ is a C₁-C₄₀ hydrocarbon group having a valence of m, Y¹ is a single bond or an oxygen atom, X¹ is a secondary or tertiary alkyl group of the formula - CR¹⁵R¹⁶R¹⁷, a metal cation of one equivalent, an ammonium cation (e.g, NR^{b}₃⁺ wherein each R^{b} is independently hydrogen, C₁-C₁₂ alkyl or C₆-C₁₈ aryl), or a phosphonium (e.g, PR^{b}₄⁺ wherein each R^{b} is independently hydrogen, C₁-C₁₂ alkyl or C₆-C₁₈ aryl) wherein R¹⁵ is a hydrogen atom or an alkyl group having 1 to 5 carbon atoms, R¹⁶ is a hydrogen atom, a phenyl group or an alky group having 1 to 5 carbon atoms, and R¹⁷ is the same as or different from R¹⁵ and has the same definition as R¹⁵, provided that two of R¹⁵, R¹⁶ and R¹⁷ cannot be hydrogen atoms, and m is an integer of 1 to 4, provided that when Y¹ is a single bond, all of X¹ in an amount of m cannot be metal cations of one equivalent, a compound of the formula ⁺X²-A²-Y¹-SO₃⁻ wherein A² is a divalent hydrocarbon group, ⁺X² is a secondary, tertiary or quaternary ammonium cation or a secondary (e.g., , tertiary or quaternary phosphonium cation, and Y¹ is a single bond or an oxygen atom, a compound of the formula A³-(⁺X³)ₙ·(R-Y¹-SO₃⁻)ₙ wherein A³ is a C₁-C₄₀ hydrocarbon group having a valence of n, ⁺X³ is a secondary, tertiary or quaternary ammonium cation (e.g., NR^{b}₃⁺ wherein each R^{b} is independently hydrogen, C₁-C₁₂ alkyl or C₆-C₁₈ aryl), or a secondary, tertiary or quaternary phosphonium cation (e.g., PR^{b}₄⁺ wherein each R^{b} is independently hydrogen, C₁-C₁₂ alkyl or C₆-C₁₈ aryl), R is a monovalent C₁-C₄₀ hydrocarbon group, n is an integer of 2 to 4, and Y¹ is a single bond or an oxygen atom, a compound of the formula A⁵-Ad¹-A⁴-(Ad²-A⁵)_{ℓ} wherein A⁵ is a monovalent or divalent C₁-C₄₀ hydrocarbon group, A⁴ is a divalent C₁-C₄₀ hydrocarbon group, each of Ad¹ and Ad² is independently an acid anhydride group selected from -SO₂-O-SO₂-, -SO₂-O-CO- and -CO-O-SO₂-, and ℓ is 0 or 1, provided that when ℓ is O, -(Ad²-A⁵)_{ℓ} is a hydrogen atom or a bond between A⁴ and A⁵, in which A⁵ is a divalent hydrocarbon group or a single bond, aminosulfonic esters having the formula RₐR_{b}N-A-SO₃R_{c}, wherein Rₐ and R_{b} are each independently hydrogen, C₁-C₁₂ alkyl, C₆-C₂₂ aryl, C₇-C₁₉ alkylaryl or Rₐ and R_{b}, either singly or in combination, form an aromatic or non-aromatic heterocyclic compound with N (e.g., pyrrolyl, pyridinyl, pyrimidyl, pyrazinyl, carbazolyl, quinolinyl, imidazoyl, piperazinyl, oxazolyl, thiazolyl, pyrazolyl, pyrrolinyl, indolyl, purinyl, pyrrolydinyl, or the like), R_{c} is hydrogen, and A is C₁-C₁₂ alkyl, C₆-C₁₈ aryl, or C₁₇-C₁₉ alkylaryl (e.g., compounds such as N-(2-hydroxyethyl) piperazine-N'-3-propanesulfonic acid, 1,4,-piperazinebis (ethanesulfonic acid), and 5-dimethylamino-1-napthalenesulfonic acid), ammonium sulfonic esters of the formula RₐR_{b}R_{c}N⁺-A-SO₃⁻, wherein Rₐ, R_{b}, are each independently hydrogen, C₁-C₁₂ alkyl, C₁-C₁₂ aryl, C₇-C₁₉ alkylaryl, or Rₐ and R_{b}, either singly or in combination, form an aromatic or non-aromatic heterocyclic compound with N (e.g., pyrrolyl, pyridinyl, pyrimidyl, pyrazinyl, carbazolyl, quinolinyl, imidazoyl, piperazinyl, oxazolyl, thiazolyl, pyrazolyl, pyrrolinyl, indolyl, purinyl, pyrrolydinyl, or the like), R_{c} is a hydrogen, and A is C₁-C₁₂ alkyl, C₆-C₁₈ aryl, or C₇-C₁₉ alkylaryl, sulfonated polystyrene, methyl acrylate-sulfonated styrene copolymer, and combinations comprising at least one of the foregoing. Quenching agents can include a combination of compounds, for example an alkyl tosylate such as n-butyl tosylate and phosphorus acid. Specifically, the quencher can comprise butyl tosylate, p-toluenesulphinic acid, phospohoric acid, phosphorous acid, or sulfuric acid, or a combination comprising one or more of the foregoing.

The release agent can comprise a polyethylene terephthalate (such as PET 3343 and PET 333), FC1 tryacylglycerides such as glycerol tristearate, monoacylglycerides such as glycerol monostearate; a poly-alpha olefin such as saturated poly(alpha) oligomer and saturated poly(1-decene) oligomer; linear low density polyethylene (LLDPE); acid esters such as dioctyl-4,5-epoxy-hexahydrophthalate; tris-(octoxycarbonylethyl)isocyanurate; epoxidized soybean oil; silicones, including silicone oils; esters, for example, fatty acid esters such as alkyl stearyl esters, e.g., methyl stearate, stearyl stearate, pentaerythritol tetrastearate, and the like; combinations of methyl stearate and hydrophilic and hydrophobic nonionic surfactants comprising polyethylene glycol polymers, polypropylene glycol polymers, poly(ethylene glycol-co-propylene glycol) copolymers, or a combination comprising at least one of the foregoing glycol polymers, e.g., methyl stearate and polyethylene-polypropylene glycol copolymer in a solvent; waxes such as beeswax, montan wax, and paraffin wax; triglycerides of the formula (A) shown below, and alkly amides of the structures (B) and (C) shown below, alkly amides comprising primary amides, the C1 to C6 N-alkyl amides and the, C1 to C6 secondary amides of; linear or branched C12-36 alkyl carboxylic acids, erucic acid, stearic acid, oleic acid, linoleic acid, linolenic acid, myristic acid, palmitic acid, arachidonic acid, behenic acid, lignoceric acid and C6-20 bis amides of C2-6 alkylene diamines or a combination of at least one of the foregoing alkyl amides; and compositions of formulas (B) and (C) 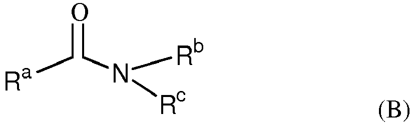 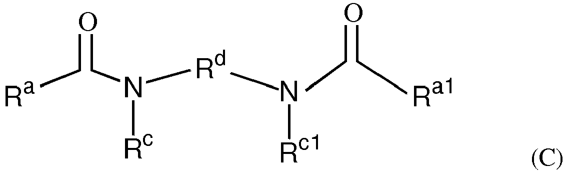 wherein R^{a} or R^{a1} are a C₁ to C₃₀ alkyl group and R^{b}, R^{c} and R^{c1} are independently H or a C₁ to C₃₀ alkyl group and R^{d} is a C₂ to C₆ alkyl group.

The antioxidant can comprise organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)] methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid or the like, or combinations including at least one of the foregoing antioxidants. Specifically, the antioxidant can comprise antioxidant 168, antioxidant 1076, or a combination comprising one or more of the foregoing.

The UV stabilizer can comprise 2-[2-hydroxy-3,5-di(1,1-dimethylbenzylphenyl)]-2H-benzotriazole; 2,2'-methylenebis(6-(2H-benzotriazol-2-yl)-4-(1,1,3,3-tetramethylbutyl)phenol); or pentaerythritol tetrakis(2-cyano-3,3-diphenylacrylate), 2-benzotriazolyl-4-tert-octylphenol, hydroxybenzophenones; hydroxybenzotriazoles; hydroxybenzotriazines; cyanoacrylates; oxanilides; benzoxazinones; 2- (2H-benzotriazol-2-yl)-4-(1,1,3,3-tetramethylbutyl)-phenol (CYASORB™ 5411); 2-hydroxy-4-n-octyloxybenzophenone (CYASORB™ 531); 2-[4,6-bis(2,4-dimethylphenyl)-1,3,5-triazin-2-yl]- 5-(octyloxy)-phenol (CYASORB™ 1164); 2,2'-(1,4- phenylene)bis(4H-3,1-benzoxazin-4-one) (CYASORB™ UV- 3638); 1,3-bis[(2-cyano-3,3-diphenylacryloyl)oxy]-2,2-bis[[(2-cyano-3, 3-diphenylacryloyl)oxy]methyl]propane (UVINUL™ 3030); 2,2'-(1,4-phenylene) bis(4H-3,1-benzoxazin-4-one); 1,3-bis[(2-cyano-3,3-diphenylacryloyl)oxy]-2,2-bis[[(2-cyano-3,3-diphenylacryloyl)oxy]methyl]propane; 2-(2'- hydroxy -5'-tert-octylphenyl)benzotriazole; nano-size inorganic materials such as titanium oxide, cerium oxide, and zinc oxide, all with particle size less than 100 nanometers; or the like, or combinations including at least one of the foregoing UV stabilizers. Specifically, the UV stabilizer can comprise ultraviolet 5411, ultraviolet 3638, ultraviolet360, ultraviolet234, or a combination comprising one or more of the foregoing.

The flame retardant can comprise a siloxane or a siloxane copolymer, a perfluoroalkyl sulfonate salt (such as salts of C₂₋₁₆ alkyl sulfonate salts such as potassium perfluorobutane sulfonate (Rimar salt), potassium perfluoroctane sulfonate, and tetraethylammonium perfluorohexane sulfonate), an aromatic phosphate ester, or a combination comprising one or more of the foregoing.

The aromatic esters of the formula (GO)₃P=O, wherein each G is independently an alkyl, cycloalkyl, aryl, alkaryl, or aralkyl group, provided that at least one G is an aromatic group. Two of the G groups can be joined together to provide a cyclic group, for example, diphenyl pentaerythritol diphosphate, which is described by Axelrod in U.S. Pat. No. 4,154,775. Other suitable aromatic phosphates can be, for example, phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, p-tolyl bis(2,5,5'-trimethylhexyl) phosphate, 2-ethylhexyl diphenyl phosphate, or the like. A specific aromatic phosphate is one in which each G is aromatic, for example, triphenyl phosphate, tricresyl phosphate, isopropylated triphenyl phosphate, and the like.

Di- or polyfunctional aromatic phosphorus-containing compounds are also useful, for example, compounds of the formulas below: 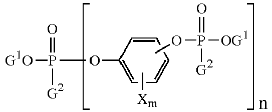 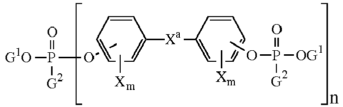 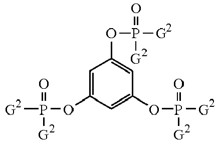 wherein each G¹ is independently a hydrocarbon having 1 to 30 carbon atoms; each G² is independently a hydrocarbon or hydrocarbonoxy having 1 to 30 carbon atoms; each X^{a} is as defined above; each X is independently a hydrogen,; m is 0 to 4, and n is 1 to 30. Examples of suitable di- or polyfunctional aromatic phosphorus-containing compounds include resorcinol tetraphenyl diphosphate (RDP), the bis(diphenyl) phosphate of hydroquinone and the bis(diphenyl) phosphate of bisphenol-A, respectively, their oligomeric and polymeric counterparts, and the like.

The siloxane copolymer can comprise a polycarbonate-polysiloxane copolymer comprises polycarbonate blocks and polydiorganosiloxane blocks. The polycarbonate blocks in the copolymer comprise repeating structural units of formula (1) as described above, for example wherein R¹ is of formula (2) as described above. These units can be derived from reaction of dihydroxy compounds of formula (3) as described above. The dihydroxy compound can be bisphenol A, in which each of A¹ and A² is p-phenylene and Y¹ is isopropylidene.

The polydiorganosiloxane blocks comprise repeating structural units of formula (17) (sometimes referred to herein as 'siloxane'): 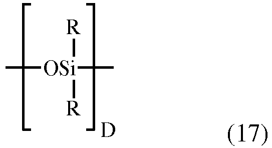 wherein each occurrence of R is same or different, and is a C₁₋₁₃ monovalent organic radical. For example, R can be a C₁-C₁₃ alkyl group, C₁-C₁₃ alkoxy group, C₂-C₁₃ alkenyl group, C₂-C₁₃ alkenyloxy group, C₃-C₆ cycloalkyl group, C₃-C₆ cycloalkoxy group, C₆-C₁₀ aryl group, C₆-C₁₀ aryloxy group, C₇-C₁₃ aralkyl group, C₇-C₁₃ aralkoxy group, C₇-C₁₃ alkaryl group, or C₇-C₁₃ alkaryloxy group. Combinations of the foregoing R groups can be used in the same copolymer.

The value of D in formula (17) can vary widely depending on the type and relative amount of each component in the thermoplastic composition, the desired properties of the composition, and like considerations. Generally, D can have an average value of 2 to 1000, specifically 2 to 500, more specifically 5 to 100. D can have an average value of 10 to 75, specifically, 40 to 60. Where D is of a lower value, e.g., less than 40, a relatively larger amount of the polycarbonate-polysiloxane copolymer can be used. Conversely, where D is of a higher value, e.g., greater than 40, a relatively lower amount of the polycarbonate-polysiloxane copolymer can be used.

A combination of a first and a second (or more) polycarbonate-polysiloxane copolymers can be used, wherein the average value of D of the first copolymer is less than the average value of D of the second copolymer.

The polydiorganosiloxane blocks can be provided by repeating structural units of formula (18): 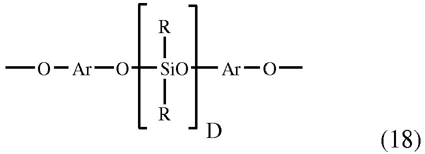 wherein D is as defined above; each R can be the same or different, and is as defined above; and Ar can be the same or different, and is a substituted or unsubstituted C₆-C₃₀ arylene radical, wherein the bonds are directly connected to an aromatic moiety. Suitable Ar groups in formula (9) can be derived from a C₆-C₃₀ dihydroxyarylene compound, for example a dihydroxyarylene compound of formula (3), (4), or (7) above. Combinations comprising at least one of the foregoing dihydroxyarylene compounds can also be used. Specific examples of suitable dihydroxyarlyene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulphide), and 1,1-bis(4-hydroxy-t-butylphenyl) propane. Combinations comprising at least one of the foregoing dihydroxy compounds can also be used.

Such units can be derived from the corresponding dihydroxy compound of the following formula (19): 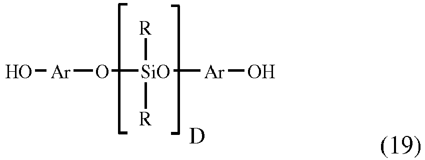 wherein Ar and D are as described above. Such compounds are further described in U.S. Patent No. 4,746,701 to Kress et al. Compounds of this formula can be obtained by the reaction of a dihydroxyarylene compound with, for example, an alpha, omega-bisacetoxypolydiorangonosiloxane under phase transfer conditions.

The polydiorganosiloxane blocks can comprise repeating structural units of formula (20): 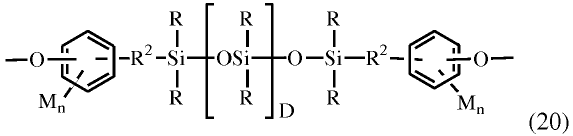 wherein R and D are as defined above. R² in formula (20) is a divalent C₂-C₈ aliphatic group. Each M in formula (20) can be the same or different, and can be a halogen, cyano, nitro, C₁-C₈ alkylthio, C₁-C₈ alkyl, C₁-C₈ alkoxy, C₂-C₈ alkenyl, C₂-C₈ alkenyloxy group, C₃-C₈ cycloalkyl, C₃-C₈ cycloalkoxy, C₆-C₁₀ aryl, C₆-C₁₀ aryloxy, C₇-C₁₂ aralkyl, C₇-C₁₂ aralkoxy, C₇-C₁₂ alkaryl, or C₇-C₁₂ alkaryloxy, wherein each n is independently 0, 1, 2, 3, or 4.

M can be hydrogen, an alkyl group such as methyl, ethyl, or propyl, an alkoxy group such as methoxy, ethoxy, or propoxy, or an aryl group such as phenyl or tolyl; R² can be a dimethylene, trimethylene or tetramethylene group; and R can be a C₁₋₈ alkyl, cyanoalkyl, or aryl such as phenyl. R can be methyl, or a mixture of methyl and or a mixture of methyl and phenyl. M can be methoxy, n can be one, R² can be a divalent C₁-C₃ aliphatic group, and R can be methyl.

These units can be derived from the corresponding dihydroxy polydiorganosiloxane (21): 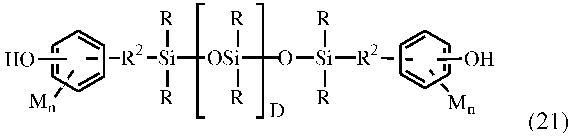 wherein R, D, M, R², and n are as described above.

Such dihydroxy polysiloxanes can be made by effecting a platinum catalyzed addition between a siloxane hydride of the formula (22), 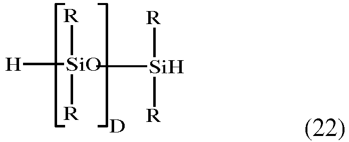 wherein R and D are as previously defined, and an aliphatically unsaturated monohydric phenol. Suitable aliphatically unsaturated monohydric phenols included, for example, eugenol, 2-alkylphenol, 4-allyl-2-methylphenol, 4-allyl-2-phenylphenol, 4-allyl-2-t-butoxyphenol, 4-phenyl-2-phenylphenol, 2-methyl-4-propylphenol, 2-allyl-4,6-dimethylphenol, 2-allyl-6-methoxy-4-methylphenol and 2-allyl-4,6-dimethylphenol. Mixtures comprising at least one of the foregoing can also be used.

The polycarbonate-polysiloxane copolymer can be manufactured by reaction of diphenolic polysiloxane (21) with a carbonate source and a dihydroxy aromatic compound of formula (3), optionally in the presence of a phase transfer catalyst as described above. Suitable conditions are similar to those useful in forming polycarbonates. For example, the copolymers are prepared by phosgenation, at temperatures from below 0°C to 100°C, for example, 25°C to 50°C. Since the reaction is exothermic, the rate of phosgene addition can be used to control the reaction temperature. The amount of phosgene required will generally depend upon the amount of the dihydric reactants. Alternatively, the polycarbonate-polysiloxane copolymers can be prepared by co-reacting in a molten state, the dihydroxy monomers and a diaryl carbonate ester, such as diphenyl carbonate, in the presence of a transesterification catalyst as described above.

In the production of the polycarbonate-polysiloxane copolymer, the amount of dihydroxy polydiorganosiloxane is selected so as to provide the desired amount of polydiorganosiloxane units in the copolymer. The amount of polydiorganosiloxane units can vary widely, i.e., can be 1 to 99 wt% of polydimethylsiloxane, or an equivalent molar amount of another polydiorganosiloxane, with the balance being carbonate units. The particular amounts used will therefore be determined depending on desired physical properties of the thermoplastic composition, the value of D (of 2 to 1000), and the type and relative amount of each component in the thermoplastic composition, including the type and amount of polycarbonate, type and amount of impact modifier, type and amount of polycarbonate-polysiloxane copolymer, and type and amount of any other additives. Suitable amounts of dihydroxy polydiorganosiloxane can be determined by one of ordinary skill in the art without undue experimentation using the guidelines taught herein. For example, the amount of dihydroxy polydiorganosiloxane can be selected so as to produce a copolymer comprising 1 to 75 wt%, or 1 to 50 wt% polydimethylsiloxane, or an equivalent molar amount of another polydiorganosiloxane. The copolymer can comprise 5 to 40 wt%, optionally 5 to 25 wt% polydimethylsiloxane, or an equivalent molar amount of another polydiorganosiloxane, with the balance being polycarbonate. The copolymer can comprise about 20 wt% siloxane.

The following examples are provided to illustrate the present process and masterbatches made therefrom.

### Examples

The following components were used in the examples.

| Table 1 | | |
|---|---|---|
| Component | Description | Source |
| PC | PC175; BPA polycarbonate having a Mw of 21800 Daltons with a melt flow of 24 to 32 g/10min (ASTM D1238, 300°C, 2.16 kg) | SABIC's Innovative Plastics™ business |
| PETS | Release agent; | UNDESA |
| | Pentaerythritol tetrastearate | |
| Antioxidant | IRGAFOS™ 168; | Ciba Specialty Chemicals |
| | Tris(2,4-di-tert-butylphenyl) phosphite | |
| UV | CYASORB™ UV-5411; | CYTEC |
| | 2-(2-hidroxi-5-t-octilfenil) benzotriazole | |

### Examples 1-3: Preparation of masterbatch compositions

Three different masterbatch compositions were prepared according to the present process.

| Table 2 | | | |
|---|---|---|---|
| Example | 1 | 2 | 3 |
| PC (wt%) | 13.2 | 46.0 | 68.4 |
| PETS (wt%) | 85.1 | 7.0 | 20.0 |
| AO (wt%) | 1.7 | 2.0 | 11.6 |
| UV (wt%) | - | 45.0 | - |
| Maximum force (N) | 7.38 | 27.17 | 6.57 |

Specifically, the masterbatch compositions were prepared by adding each of the components listed to a batch mixer (DINNISEN PG-250MG double shaft paddle mixer). The components were fed into the mixer via 1 of 4 feeders, 1 of 2 dischargers, or via a manual feed location. One of the feeders was a feeder model K-TRON K2-ML-T60 twin screw feeder. The mixer mixed the components for 5 minutes (min) at a speed of 25 hertz (Hz). After mixing, the mixed compositions were sent to the pellet mill via a buffer hopper where they were fed via a screw feeder (K-TRON K2-MV-S60 single screw feeder) operating at 60 to 70% of its maximum at a rate of 300 to 400 kilograms per hour (kg/h). The die head in the pellet mill had opening of 20 mm by 3.2 mm or 16 mm by 3.5 mm and the pellets were cut to a length of 7 to 7.5 mm.

### Example 4: Pellet strength

The impact properties of Examples 1-3 were determined by averaging the maximum force at break of 10 pellets per each sample. The experiments were performed on an INSTRON operating at a rate of 4.00 millimeter per minute (mm/min). The impact properties are shown in Table 2. Table 2 shows that the average impact at break ranges from about 6 to about 28 Newtons (N) depending on the composition of the masterbatch.

All ranges disclosed herein are inclusive of the endpoints, and the endpoints are independently combinable with each other (e.g., ranges of "up to 25 wt%, or, more specifically, 5 to 20 wt%", is inclusive of the endpoints and all intermediate values of the ranges of "5 to 25 wt%," etc.). "Combination" is inclusive of blends, mixtures, alloys, reaction products, and the like. Furthermore, the terms "first," "second," and the like, herein do not denote any order, quantity, or importance, but rather are used to denote one element from another. The terms "a" and "an" and "the" herein do not denote a limitation of quantity, and are to be construed to cover both the singular and the plural, unless otherwise indicated herein or clearly contradicted by context. The suffix "(s)" as used herein is intended to include both the singular and the plural of the term that it modifies, thereby including one or more of that term (e.g., the film(s) includes one or more films). Reference throughout the specification to "one embodiment," "another embodiment," "an embodiment," and so forth, means that a particular element (e.g., feature, structure, and/or characteristic) described in connection with the embodiment is included in at least one embodiment described herein, and may or may not be present in other embodiments.

## Claims

1. A masterbatch facility for making a masterbatch of pellets comprising:
a feed and blend system (10), a pellet mill (20), a product handling system (30), and a utilities system (50); **characterized in that**,
the feed and blend system (10) comprises at least one component feeder (14), at least one component discharger (12), a manual feed station (16), or a combination thereof, and further comprising a mixer (18); wherein at least one of the component feeders (14) is an assisted component feeder; wherein at least two components are fed via the component feeder (14), component discharger (12), manual feed station (16), or a combination thereof to the mixer (18); wherein the mixer (18) is a double shaft mixer with shafts rotating in opposite directions;
the pellet mill (20) comprises a buffer hopper, a screw feeder, a pellet compactor (22), and a screener (24); wherein the pellet compactor (22) comprises a die plate, a roll, and a cutter hub; wherein the buffer hopper is a vibratory buffer hopper;
the product handling system (30) comprises a product hopper and a fill station (32); wherein the product hopper is a vibratory product hopper; and
the facility further comprises a utilities system (50) comprising a ventilation system, a central vacuum station, a vacuum hood, or a combination comprising one or more of the foregoing.

2. The facility of Claim 1, wherein the feed and blend system (10) comprises four component feeders (14).

3. The facility of any of Claims 1 to 2, wherein the feed and blend system (10) comprises two component dischargers (12).

4. The facility of any of Claims 1 to 3, wherein the assisted component feeder comprises an internal agitator, a vibrator, and a knocker or a combination comprising one or more of the foregoing.

5. A process for making masterbatch pellets using the masterbatch facility as claimed in any one of the preceding claims, the process comprising:
introducing two or more components to a mixer (18);
mixing the components in the mixer (18) to form a mixed composition;
compacting the mixed composition into masterbatch pellets; and
screening the masterbatch pellets into a desired size range;
**characterized in that**:
the components are added to the mixer (18) via at least one component feeder (14), at least one component discharger (12), or a manual feed station (16), wherein at least one of the component feeders (14) is an assisted component feeder and wherein the mixer (18) is a double shaft mixer with shafts rotating in opposite directions; and that the process further comprises,
prior to compacting, introducing the mixed composition to a vibratory buffer hopper and feeding the mixed composition from the vibratory buffer hopper to a pellet compactor (22) via a screw feeder;
introducing the screened masterbatch pellets to a vibratory product hopper; and
feeding the screened masterbatch pellets from the vibratory product hopper into a product bag (42).

6. The process of Claim 5, wherein the assisted component feeder comprises a twin screw, an internal agitator, a vibrator, a knocker system, or a combination comprising one or more of the foregoing.

7. The process of any of Claims 5 or 6, wherein the mixing occurs for less than or equal to 5 minutes.

8. The process of any of Claims 5 to 7, wherein, by minimizing the amount of energy to be imparted on the composition due to the shear imposed by the mixer, the mixing does not melt components with a melting temperature of 60°C.

9. The process of any of Claims 5 to 8, wherein the mixing occurs at a tipspeed of 1 to 5 m/s.

10. The process of any of Claims 5 to 9, wherein the introducing is an automated process.

11. The process of any of Claims 5 to 10, wherein the buffer hopper is a vibratory buffer hopper operating at a frequency of 2,000 to 100,000 vibrations per minute.

12. The process of any of Claims 5 to 11, wherein the feeding occurs at a rate of 45 to 4500 dm³/h.

13. The process of any of Claims 5 to 12, wherein the entire process is automated.

## Patentansprüche

1. Masterbatch-Anlage zur Herstellung eines Masterbatch-Pellets, enthaltend:
ein Beschickungs- und Mischungssystem (10), eine Pelletmühle (20), ein Produkthandhabungssystem (30) und ein Versorgungssystem (50); **dadurch gekennzeichnet, dass**
das Beschickungs- und Mischungssystem (10) mindestens einen Komponentenzuführer (14), mindestens einen (12), eine manuelle Zuführstation (16), oder eine Kombination davon, enthält, und ferner enthaltend
einen Mischer (18); wobei mindestens einer der Komponentenzuführer (14) ein unterstützter Komponentenzuführer ist;
wobei mindestens zwei Komponenten über den Komponentenzuführer (14), den Komponentenentlader (12), die manuelle Zuführstation (16), oder eine Kombination davon, zum Mischer (18) zugeführt werden; wobei der Mischer (18) ein Doppelwellenmischer mit gegenläufig rotierenden Wellen ist;
die Pelletmühle (20) einen Pufferbehälter, einen Schneckenförderer, einen Pelletverdichter (22) und einen Screener (24) enthält; wobei der Pelletverdichter (22) eine Düsenplatte, eine Walze und eine Fräsnabe aufweist; wobei der Pufferbehälter ein Vibrationspufferbehälter ist;
das Produkthandhabungssystem (30) einen Produktbehälter und eine Füllstation (32) enthält; wobei der Produktbehälter ein Vibrationsproduktbehälter ist; und
die Anlage ferner ein Versorgungssystem (50) umfasst, das ein Belüftungssystem, eine zentrale Vakuumstation, eine Vakuumhaube, oder eine Kombination enthaltend einer oder mehreren der Vorgenannten, enthält.

2. Anlage nach Anspruch 1, wobei das Beschickungs- und Mischsystem (10) vier Komponentenzuführer (14) enthält.

3. Anlage nach einem der Ansprüche 1 bis 2, wobei das Beschickungs- und Mischsystem (10) zwei Komponentenentlader (12) enthält.

4. Anlage nach einem der Ansprüche 1 bis 3, wobei der unterstützte Komponentenzuführer einen internen Rührer, einen Vibrator und einen Klopfer, oder eine Kombination einer oder mehrerer der Vorgenannten, enthält.

5. Verfahren zur Herstellung von Masterbatch-Pellets unter Verwendung der Masterbatch-Anlage gemäß einem der vorhergehenden Ansprüche, das Verfahren umfassend:
Einbringen von zwei oder mehr Komponenten in einen Mischer (18);
Mischen der Komponenten im Mischer (18) zur Bildung einer gemischten Zusammensetzung;
Kompaktieren der gemischten Zusammensetzung zu Masterbatch-Pellets; und
Sieben der Masterbatch-Pellets in einen gewünschten Größenbereich;
**dadurch gekennzeichnet, dass** die Komponenten dem Mischer (18) über mindestens einen Komponentenzuführer (14), mindestens einen Komponentenentlader (12) oder eine manuelle Zuführstation (16) zugeführt werden, wobei mindestens einer der Komponentenzuführer (14) ein unterstützter Komponentenzuführer ist, und wobei der Mischer (18) ein Doppelwellenmischer mit gegenläufig rotierenden Wellen ist;
und dass das Verfahren ferner umfasst:
Vor dem Kompaktieren, Einbringen der gemischten Zusammensetzung in einen Vibrationspufferbehälter, und Zuführen der gemischten Zusammensetzung von dem Vibrationspufferbehälter über einen Schneckenförderer zu einem Pelletverdichter (22);
Einbringen der gesiebten Masterbatch-Pellets in einen Vibrationsproduktbehälter; und
Zuführen der gesiebten Masterbatch-Pellets aus dem Vibrationsproduktbehälter in einen Produktsack.

6. Verfahren nach Anspruch 5, wobei der unterstützte Komponentenzuführer eine Doppelschnecke, ein internes Rührwerk, einen Vibrator, ein Klopfersystem, oder eine Kombination eine oder mehrerer der Vorgenannten, enthält.

7. Verfahren nach einem der Ansprüche 5 oder 6, wobei das Mischen für weniger als, oder gleich, 5 Minuten erfolgt.

8. Verfahren nach einem der Ansprüche 5 bis 7, wobei, durch Minimierung der Energiemenge, die der Zusammensetzung aufgrund der durch den Mischer auferlegten Scherung verliehen werden soll, das Mischen keine Komponenten mit einer Schmelztemperatur von 60 °C schmilzt.

9. Verfahren nach einem der Ansprüche 5 bis 8, wobei das Mischen bei einer Spitzengeschwindigkeit von 1 bis 5 m/s erfolgt.

10. Verfahren nach einem der Ansprüche 5 bis 9, wobei das Einführen ein automatisierter Prozess ist.

11. Verfahren nach einem der Ansprüche 5 bis 10, wobei der Pufferbehälter ein Vibrationspufferbehälter ist, der mit einer Frequenz von 2.000 bis 100.000 Schwingungen pro Minute betrieben wird.

12. Verfahren nach einem der Ansprüche 5bis 11, wobei die Zufuhr mit einer Geschwindigkeit von 45 bis 4500 dm³/h stattfindet.

13. Verfahren nach einem der Ansprüche 5 bis 12, wobei der gesamte Prozess automatisiert ist.

## Revendications

1. Installation de mélange-maître pour fabriquer un mélange-maître de pastilles comprenant :
un système d'alimentation et de mélange (10), une presse à agglomérer (20), un système de manipulation de produit (30), et un système de distribution (50) ; **caractérisée en ce que** :
le système d'alimentation et de mélange (10) comprend au moins un dispositif d'alimentation de composant (14), au moins un déchargeur de composant (12), une station d'alimentation manuelle (16) ou une combinaison de ceux-ci, et comprenant en outre un mélangeur (18) ; où au moins l'un des dispositifs d'alimentation de composant (14) est un dispositif d'alimentation de composant assisté ;
dans laquelle au moins deux composants sont fournis via le dispositif d'alimentation de composant (14), le déchargeur de composant (12), la station d'alimentation manuelle (16) ou une combinaison de ceux-ci au mélangeur (18) ; dans laquelle le mélangeur (18) est un mélangeur à deux arbres avec des arbres qui tournent dans des directions opposées ;
la presse à agglomérer (20) comprend une trémie tampon, un dispositif d'alimentation à vis, un compacteur de pastilles (22) et un tamis (24) ; dans laquelle le compacteur de pastilles (22) comprend une plaque de matrice, un rouleau et un moyeu de coupe ; dans laquelle la trémie tampon est une trémie tampon vibratoire ;
le système de manipulation de produit (30) comprend une trémie de produit et une station de remplissage (32) ;
dans laquelle la trémie de produit est une trémie de produit vibratoire ; et
l'installation comprend en outre un système de distribution (50) comprenant un système de ventilation, une station de vide centrale, une hotte d'aspiration ou une combinaison comprenant un ou plusieurs des éléments précédents.

2. Installation selon la revendication 1, dans laquelle le système d'alimentation et de mélange (10) comprend quatre dispositifs d'alimentation de composant (14).

3. Installation selon l'une quelconque des revendications 1 à 2, dans laquelle le système d'alimentation et de mélange (10) comprend deux déchargeursde composant (12).

4. Installation selon l'une quelconque des revendications 1 à 3, dans laquelle le dispositif d'alimentation de composant assisté comprend un agitateur interne, un vibrateur et un pétrisseur ou une combinaison comprenant un ou plusieurs des précédents.

5. Procédé pour réaliser des pastilles de mélange-maître utilisant l'installation de mélange-maître selon l'une quelconque des revendications précédentes, le procédé comprenant les étapes suivantes :
introduire deux composants ou plus dans un mélangeur (18) ;
mélanger les composants dans le mélangeur (18) pour former une composition mélangée ;
compacter la composition mélangée en pastilles de mélange-maître ; et
tamiser les pastilles de mélange-maître selon une plage de taille souhaitée ;
**caractérisé en ce que** :
les composants sont ajoutés au mélangeur (18) via au moins un dispositif d'alimentation de composant (14), au moins un déchargeur de composant (12) ou une station d'alimentation manuelle (16), dans lequel au moins l'un des dispositifs d'alimentation de composant (14) est un dispositif d'alimentation de composant assisté et dans lequel le mélangeur (18) est un mélangeur à deux arbres avec des arbres qui tournent dans des directions opposées ; et **en ce que** le procédé comprend en outre :
avant le compactage, introduire la composition mélangée dans une trémie tampon vibratoire et amener la composition mélangée de la trémie tampon vibratoire à un compacteur de pastille (22) via un dispositif d'alimentation à vis ;
introduire les pastilles de mélange-maître tamisées dans la trémie de produit vibratoire ; et
fournir les pastilles de mélange-maître tamisées, de la trémie de produit vibratoire dans un sac de produit (42).

6. Procédé selon la revendication 5, dans lequel le dispositif d'alimentation de composant assisté comprend une vis jumelée, un agitateur interne, un vibrateur, un système de frappe ou une combinaison comprenant un ou plusieurs des précédents.

7. Procédé selon l'une quelconque des revendications 5 ou 6, dans lequel le mélange a lieu pendant une période inférieure ou égale à 5 minutes.

8. Procédé selon l'une quelconque des revendications 5 à 7, dans lequel, en minimisant la quantité d'énergie à communiquer sur la composition due au cisaillement imposé par le mélangeur, le mélange ne fait pas fondre les composants avec une température de fusion de 60 °C.

9. Procédé selon l'une quelconque des revendications 5 à 8, dans lequel le mélange a lieu à une vitesse de pointe de 1 à 5 m/s.

10. Procédé selon l'une quelconque des revendications 5 à 9, dans lequel l'introduction est un procédé automatique.

11. Procédé selon l'une quelconque des revendications 5 à 10, dans lequel la trémie tampon est une trémie tampon vibratoire fonctionnant à une fréquence de 2000 à 100 000 vibrations par minute.

12. Procédé selon l'une quelconque des revendications 5 à 11, dans lequel l'alimentation a lieu à une vitesse de 45 à 4500 dm³/h.

13. Procédé selon l'une quelconque des revendications 5 à 12, dans lequel tout le procédé est automatisé.
